# EUROPÄISCHE PATENTSCHRIFT

(11) **EP 3 069 418 B1**
(45) Veröffentlichungstag und Bekanntmachung des Hinweises auf die Patenterteilung: **18.07.2018**
(21) Anmeldenummer: 14803062.0
(22) Anmeldetag: 06.11.2014
(51) Int. Cl.: B23K 20/02, B23K 20/10, H01R 43/02, B23K 20/26, B23K 101/38

(54) **VORRICHTUNG ZUM VERSCHWEISSEN VON ELEKTRISCHEN LEITERN**
DEVICE FOR WELDING ELECTRICAL CONDUCTORS
DISPOSITIF DE SOUDAGE DE CONDUCTEURS ÉLECTRIQUES

(30) Priorität: 11.11.2013 DE 102013222939
(43) Veröffentlichungstag der Anmeldung: 21.09.2016
(73) Patentinhaber: Schunk Sonosystems GmbH, 35435 Wettenberg (DE)
(72) Erfinder: DR. TRUBE, Stefan, 35435 Wettenberg (DE); SCHMIDT, Reiner, 35457 Lollar (DE); KOC, Sinan, 35325 Mücke (DE); WAGNER, Peter, 35435 Wettenberg (DE); STROH, Dieter, 35435 Wettenberg (DE)
(74) Vertreter: advotec.
(86) Internationale Anmeldenummer: PCT/EP2014/073939
(87) Internationale Veröffentlichungsnummer: WO 2015/067698

(56) Entgegenhaltungen:
- EP-A1- 1 765 545
- EP-A2- 0 286 975
- WO-A1-2013/101620
- DE-A1- 4 116 316
- US-A- 4 472 056
- US-A1- 2008 170 238

## Beschreibung

Die Erfindung betrifft eine Vorrichtung zum Verschweißen von stabförmigen, mit einer äußeren isolierenden Umhüllung versehenen elektrischen Leitern, die an ihren Enden von der Umhüllung befreite Blankbereiche aufweisen, deren Länge durch eine axiale Umhüllungsendfläche definiert ist, umfassend einen Verdichtungsraum zur Aufnahme von miteinander zu verbindenden Verbindungsbereichen der Leiter, wobei der Verdichtungsraum in einer ersten Achsenrichtung an zwei einander gegenüberliegenden Seiten durch eine Arbeitsfläche einer in die erste Achsenrichtung Ultraschallschwingungen übertragenden Sonotrode und eine Gegenfläche einer Gegenelektrode sowie in einer zweiten Achsenrichtung an zwei einander gegenüberliegenden Seiten durch eine Begrenzungsfläche eines in die zweite Achsenrichtung verfahrbaren Schieberelements und eine Begrenzungsfläche eines Begrenzungselements begrenzt ist.

Eine Vorrichtung der eingangs genannten Art ist aus der EP 1 765 545 A1 bekannt, die mit einer Hilfseinrichtung versehen ist, welche die Ausbildung einer einander überdeckenden Anordnung der Verbindungsbereiche im Verdichtungsraum dadurch unterstützt, dass mittels eines Führungs- oder Leitelements dafür gesorgt wird, dass die Verbindungsbereiche in einer Achsenrichtung quer zur Längserstreckung der Leiter mit parallel zueinander ausgerichteten Längsachsen der Verbindungsbereiche übereinander liegen. Eine derartige Überdeckungsanordnung ist notwendig, um nach einer Schließung des Verdichtungsraumes durch entsprechende Verfahrbewegungen der den Verdichtungsraum begrenzenden Flächen und anschließender Schwingungsbeaufschlagung der in "Stapelanordnung" angeordneten Verbindungsbereiche durch die Sonotrode eine zuverlässige Verbindung zwischen den Verbindungsbereichen zu ermöglichen.

Neben einer fehlerfreien Verbindung der Verbindungsbereiche zur Ausbildung von Schweißknoten, ist es für die Qualität derartiger Ultraschallschweißverbindungen auch erforderlich, dass die Schweißknoten bestimmte geometrische Vorgaben erfüllen, die je nach Art und Größe der Schweißknoten sehr unterschiedlich sind.

So kommt es beispielsweise bei Durchgangsschweißknoten, die Verbindungsbereiche von gegensinnig zueinander angeordneten Leitern miteinander verbinden, darauf an, dass vorgegebene Abstände zwischen einem Endquerschnitt eines Verbindungsbereichs eines sich in die eine Richtung erstreckenden Leiters und der Umhüllungsendfläche einer isolierenden Umhüllung eines mit dem ersten Leiter verbundenen weiteren Leiters, der sich in die entgegengesetzte Richtung erstreckt, eingehalten werden. Bei einem Terminalschweißknoten, der zur Verbindung eines Verbindungsbereichs eines Leiters mit einem fachterminologisch auch als Terminal bezeichneten Anschlussstück dient, sollte ebenfalls ein vorgegebener Abstand zwischen dem Endquerschnitt des Leiters und einer auf der Längsachse des Leiters angeordneten Oberfläche des Anschlussstücks eingehalten werden.

Die Einhaltung definierter Abstände dient unter anderem dazu, sicherzustellen, dass die Verbindungsbereiche einschließlich der Endquerschnitte durch die Schwingungsbeaufschlagung komprimiert und miteinander verschweißt werden, ohne dass aufgrund einer unvollständigen Komprimierung oder Verschweißung der Verbindungsbereiche Filamente oder Adern der Leiter radial hervorragen könnten. Ansonsten könnten radial hervorragende Filamente oder Adern in einer Kabelinstallation isolierende Umhüllungen benachbarter Leiter zerstören, was zum Entstehen von Kurzschlüssen führen könnte.

Die WO 2013/101620 A1 offenbart einen Lichtlinienscanner, der beispielsweise bei der Produktionskontrolle zur Überprüfung und zum Messen von Fertigungstoleranzen einsetzbar ist. Der Lichtlinienscanner weist eine Lichtquelle auf, welche ein Licht emittiert und durch eine erste Linsenanordnung, eine Schablone und eine zweite Linsenanordnung eine Lichtlinie definierter Länge auf ein zu messendes Objekt projiziert, um einen Vergleich von Soll- und Ist-Abmessungen von zu prüfenden Objekten durchzuführen.

Aus der EP 0 286 975 A2 ist eine Vorrichtung zum Verschweißen von elektrischen Leitern bekannt. Jeder elektrische Leiter weist einen von einer Umhüllung befreiten Blankbereich auf, dessen Länge durch eine axiale Umhüllungsendfläche definiert ist. Die Vorrichtung umfasst einen Verdichtungsraum. Der Verdichtungsraum ist in einer ersten Achsenrichtung (z-Achse) an zwei einander gegenüberliegenden Seiten durch eine Arbeitsfläche einer in die erste Achsenrichtung Ultraschallschwingungen übertragende Sonotrode und eine Gegenfläche einer Gegenelektrode begrenzt. Zudem ist der Verdichtungsraum in einer zweiten Achsenrichtung (y-Achse) an zwei einander gegenüberliegenden Seiten durch eine Begrenzungsfläche eines in die zweite Achsenrichtung verfahrbaren Schieberelements und eine Begrenzungsfläche eines Begrenzungselements begrenzt.

Aus der US 2008/0170238 A1 geht ein Lichtlinienscanner hervor, welcher, mittels zweier Lichtprojektionssysteme jeweils eine Lichtlinie auf mehrere zu messende Objekte zu projiziert. Die technische Wirkung des Lichtlinienscanners liegt darin, dass durch einen Versatz einer Linie die Höhe eines Stufenabschnitts zwischen benachbarten Flächen bestimmt werden kann.

Aus der US 4,472,056 A ist eine Formerfassungsvorrichtung bekannt, welche einen Lichtlinienscanner nutzt, um eine Lichtlinie auf ein zu erfassendes Objekt zu projizieren.

Die DE 4116316 A1 beschreibt ein Verfahren zur Qualitätskontrolle von isolationsfreien Leitern. Zwischen einem Lichtsender und einem Lichtempfänger wird ein Lichtvorhang aufgespannt. In diesen Lichtvorhang ragt ein Ende des Leiters. Das in den Lichtvorhang ragende Ende des Leiters erzeugt ein Signal auf Seiten des Lichtempfängers, welches mit dem Durchmesser des Leiters korrespondiert. Da der isolationsfreie Abschnitt einen kleineren Durchmesser aufweist als der isolierte Abschnitt und somit ein anderes Signal erzeugt als der isolierte Abschnitt, kann bei einem Abgleich von Ist- mit Soll-Werten ermittelt werden, ob ein Isolationsentfernungsvorgang erfolgreich durchgeführt wurde.

Der vorliegenden Erfindung liegt daher die Aufgabe zugrunde, eine Vorrichtung der eingangs genannten Art vorzuschlagen, die die Herstellung definierter Schweißknoten zwischen elektrischen Leitern ermöglicht und somit die Zuverlässigkeit von Kabelinstallationen erhöht.

Zur Lösung dieser Aufgabe weist die erfindungsgemäße Vorrichtung die Merkmale des Anspruchs 1 auf.

Erfindungsgemäß ist die Vorrichtung mit einem Verdichtungsraum versehen, der eine Markierungseinrichtung zur axialen Positionierung der Verbindungsbereiche aufweist, wobei die Markierungseinrichtung eine Strahlungsemissionseinrichtung aufweist, die berührungslos mit Endquerschnitten der Verbindungsbereiche zusammen wirkt, derart, dass die axiale Position der Endquerschnitte innerhalb des Verdichtungsraumes in einer dritten Achsenrichtung (x-Achse) parallel zur Arbeitsfläche der Sonotrode durch eine als Reflektionspunkt oder Absorptionspunkt der Strahlung auf der Arbeitsfläche der Sonotrode oder der Begrenzungsfläche des Begrenzungselements ausgebildete Positionsmarke definiert wird.

Erfindungsgemäß wird also die Einstellung einer definierten axialen Position des Endquerschnitts ermöglicht, ohne dass hierzu der Endquerschnitt zur Anlage gegen einen axialen Anschlag oder dergleichen gebracht werden müsste. Vielmehr wird die Positionierung des Endquerschnitts durch axiale Ausrichtung des Endquerschnitts gegenüber einer Referenzmarke oder Positionsmarke ermöglicht. Diese Positionsmarke wird mittels einer Strahlungsemissionseinrichtung erzeugt, sodass die Ausbildung der Positionsmarke als optisch wahrnehmbare Markierung erfolgt, ohne dass ein mechanischer Anschlag oder dergleichen ausgebildet werden müsste. Die gewünschte axiale Positionierung des Endquerschnitts erfolgt demnach ohne dass der Endquerschnitt zur Anlage gegen einen mechanischen Anschlag gebracht werden müsste, also berührungslos.

Die hier zur Erläuterung der Positionsmarke verwendeten Begriffe "Reflexionspunkt" und "Absorptionspunkt" sind nicht einschränkend als Hinweis auf eine punktförmige Ausgestaltung einer Reflexionsstelle oder einer Absorptionsstelle zu verstehen, sondern als Bezeichnung für einen geometrischen Ort oder Bereich. Der Bereich der Reflexion oder der Absorption kann daher auch linienförmig oder als unregelmäßig ausgestaltete Fläche ausgebildet sein.

Bei den in der erfindungsgemäßen Vorrichtung miteinander verschweißten Leitern handelt es sich in der Regel um stabförmige, also im Wesentlichen in ihrer Dimension durch die Längserstreckung bestimmte Leiter, die eine zumindest geringe Biegesteifigkeit aufweisen, um - solange keine radiale Belastung auf die Leiter wirkt - trotz flexibler Ausbildung ihre Längserstreckung beizubehalten. Derartige Leiter können beispielsweise als eine isolierte Litze ausgebildet sein, die, insbesondere in der Ausbildung als Litze zu Litzenpaketen aus einer Mehrzahl von Litzen zusammengefasst, in den Verdichtungsraum eingelegt werden.

Gemäß einer bevorzugten Ausführungsform ist zwischen der Strahlungsemissionseinrichtung und der Arbeitsfläche der Sonotrode oder der Begrenzungsfläche des Begrenzungselements eine Strahlungsleiteinrichtung mit zumindest einem Strahlleiter angeordnet, derart, dass ein durch den Strahlleiter definierter und auf die Arbeitsfläche der Sonotrode oder die Begrenzungsfläche des Begrenzungselements auftreffender Strahlengang zur Ausbildung der in einem definierten Abstand a von einem Seitenrand der Arbeitsfläche der Sonotrode angeordneten Positionsmarke dient. Da zur Einstellung des definierten Abstands neben der Positionsmarke Bezug genommen wird auf eine ohnehin durch den Seitenrand der Arbeitsfläche gebildete Bezugskante, ist außer der Installation der Strahlungsemissionseinrichtung und der Strahlungsleiteinrichtung zur Realisierung der Vorrichtung keine weitere Einrichtung oder Veränderung an dem Verdichtungsraum erforderlich, um die Vorrichtung zu realisieren.

Besonders vorteilhaft ist es, wenn der Strahlleiter derart ausgebildet ist, dass die Positionsmarke eine linienförmige Erstreckung quer zur dritten Achsenrichtung (x-Achse) aufweist, sodass insbesondere bei einer Stapelanordnung von Verbindungsbereichen mit mehreren in einer Stapelebene, also parallel zur Arbeitsfläche der Sonotrode angeordneten Verbindungsbereichen die Endquerschnitte sämtlicher auf der Arbeitsfläche angeordneter Verbindungsbereiche an der linienförmigen Positionsmarke ausgerichtet werden können.

Wenn der Strahlleiter mit einer Strahlumlenkeinrichtung versehen ist, ist die Anordnung der Strahlungsemissionseinrichtung unabhängig von dem die Positionsmarke ausbildenden Reflektionspunkt oder Absorptionspunkt der Strahlung möglich, sodass insbesondere eine Anordnung der Strahlungsemissionseinrichtung in einer zur Arbeitsfläche der Sonotrode parallelen Ebene und seitlich versetzt zum Verdichtungsraum möglich ist, um durch die Emissionseinrichtung die Zugänglichkeit des Verdichtungsraumes zum Einlegen der Leiter bzw. der Verbindungsbereiche der Leiter in den Verdichtungsraum nicht zu beeinträchtigen.

Besonders vorteilhaft ist es, wenn der Strahlleiter als optischer Wellenleiter ausgebildet ist, sodass die Strahlungsemissionseinrichtung auch als eine separate, von der Schweißvorrichtung völlig unabhängige und mit dieser über eine Kopplungseinrichtung verbindbare Einrichtung ausgebildet sein kann. Hierzu bietet sich insbesondere die Verwendung eines Glasfaserkabels als optischer Wellenleiter an.

Bei einer bevorzugt integralen Ausgestaltung der Strahlumlenkeinrichtung im Strahlleiter, wie es beispielsweise der Fall ist bei Verwendung eines flexiblen optischen Wellenleiters, also beispielsweise eines Glasfaserkabels, kann auf die Ausgestaltung der Strahlumlenkeinrichtung als eine vom Wellenleiter unabhängige Einrichtung verzichtet werden. Alternativ ist es natürlich auch möglich, die Strahlumlenkeinrichtung als Prisma auszubilden, um beispielsweise einen horizontal auf eine Brechungsfläche des Prismas auftreffenden Strahlengang in einen vertikal aus dem Prisma austretenden Strahlengang, der zur Ausbildung der Positionsmarke dient, umzulenken.

Zur Erzielung einer besonders kompakten Ausgestaltung einer Kombination eines Verdichtungsraums der Schweißvorrichtung mit einer Strahlungsemissionseinrichtung, die zur Ausbildung der Positionsmarke dient, kann die Strahlungsemissionseinrichtung oberhalb des Begrenzungselements und gegenüberliegend des Schieberelements mit Abstand zur Arbeitsfläche der Sonotrode angeordnet sein, derart, dass ein aus der Strahlungsemissionseinrichtung austretender Strahlengang zu der über der Arbeitsfläche der Sonotrode angeordneten Strahlumlenkeinrichtung verläuft und der aus der Strahlumlenkeinrichtung austretende Strahlengang zur Ausbildung der Positionsmarke auf die Arbeitsfläche der Sonotrode auftrifft.

Wenn die Strahlungsleiteinrichtung zwei Strahlleiter aufweist, die zwei Strahlengänge ausbilden, die zur Ausbildung von zwei in einem definierten Abstand a von den Seitenrändern der Arbeitsfläche der Sonotrode und in einem definierten Abstand b voneinander angeordneten Positionsmarken dienen, kann vorteilhaft eine axiale Positionierung von Endquerschnitten von Verbindungsbereichen zweier Leiter erfolgen, die zur Ausbildung eines Durchgangsschweißknotens zweier einander entgegengesetzt angeordneter Leiter miteinander verschweißt werden.

Unabhängig davon, ob die erfindungsgemäße Vorrichtung so ausgebildet ist, dass eine als Durchgangsschweißknoten ausgebildete Schweißverbindung zwischen axial positionierten Endquerschnitten von Verbindungsbereichen von einander entgegengesetzt ausgerichteten Leitern hergestellt wird, oder ob die erfindungsgemäße Vorrichtung zur Ausbildung einer als Endschweißknoten ausgebildeten Schweißverbindung zwischen Verbindungsbereichen von Leitern dient, die sich parallel zueinander erstrecken, ist es in jedem Fall vorteilhaft, wenn die Strahlungsemissionseinrichtung, die zur Ausbildung der Positionsmarken dient, als eine optische Strahlung emittierende Strahlungsquelle ausgebildet ist, wobei sich insbesondere wegen der hohen Strahlungsdichte und der damit ermöglichten besonders kontrastreichen Ausbildung der Positionsmarke die Verwendung einer Laserstrahlungsquelle als Strahlungsquelle als vorteilhaft erweist.

Nachfolgend werden bevorzugte Ausführungsformen der Vorrichtung anhand der Zeichnung näher erläutert.

Es zeigen:
- **Fig. 1:**: Eine Vorderansicht eines geöffneten Verdichtungsraumes einer Ultraschallschweißvorrichtung mit zwei in einer Stapelanordnung übereinander angeordneten Verbindungsbereichen von miteinander zu verschweißenden Leitern;
- **Fig. 2:**: den in **Fig. 1** dargestellten Verdichtungsraum in geschlossener Konfiguration;
- **Fig. 3:**: den Verdichtungsraum gemäß **Fig. 1** in Draufsicht mit zwei übereinander in Stapelanordnung und gleichsinnig ausgerichteten Leitern zur Ausbildung einer Endschweißknotens;
- **Fig. 4:**: den in **Fig. 3** dargestellten Verdichtungsraum in Schnittdarstellung längs Schnittlinienverlauf IV-IV;
- **Fig. 5:**: den in **Fig. 1** dargestellten Verdichtungsraum in Draufsicht mit Darstellung eines auf einem Terminal angeordneten Verbindungsbereichs eines Leiters zur Ausbildung eines Terminalschweißknotens;
- **Fig. 6:**: den in **Fig. 4** dargestellten Verdichtungsraum in Schnittdarstellung längs Schnittlinienverlauf VI-VI;
- **Fig. 7:**: den in **Fig. 1** dargestellten Verdichtungsraum in Draufsicht mit in einer Stapelanordnung übereinander liegend angeordneten Verbindungsbereichen von zwei gegensinnig angeordneten Leitern zur Ausbildung eines Durchgangsschweißknotens;
- **Fig. 8:**: den in **Fig. 7** dargestellten Verdichtungsraum in Schnittdarstellung längs Schnittlinienverlauf VIII-VIII;
- **Fig. 9:**: einen Verdichtungsraum mit Strahlungsemissionseinrichtung in isometrischer Darstellung;
- **Fig.10:**: eine Prinzipdarstellung einer Ultraschallschweißvorrichtung mit Peripherie.

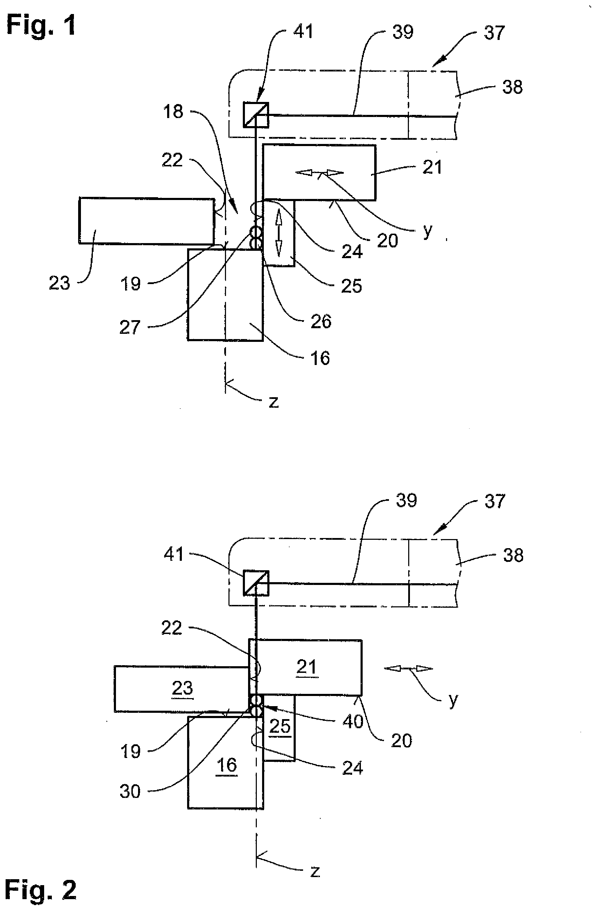

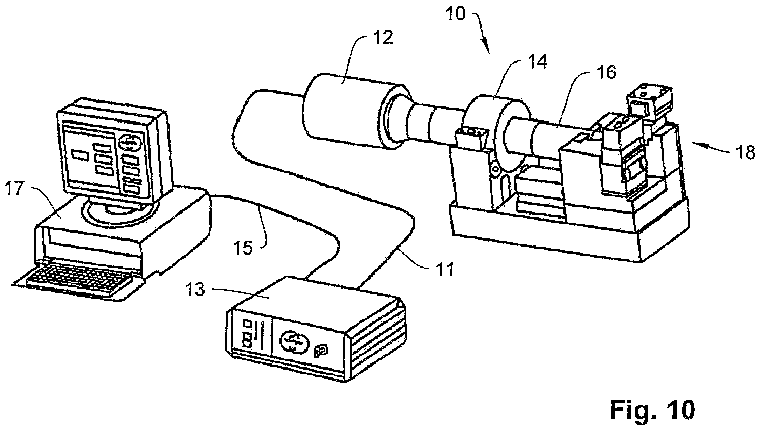

**Fig. 10** zeigt die grundsätzliche Anordnung von Komponenten einer Ultraschallschweißvorrichtung 10, die einen Konverter 12, einen Booster 14 sowie eine Sonotrode 16 umfasst. Die Sonotrode 16 bzw. eine dieser zugeordnete Gegenelektrode 21 begrenzen, wie insbesondere in **Fig.1** dargestellt ist, in einer ersten Achsenrichtung (z-Achse) einen Verdichtungsraum 18, der in Höhe und Breite verstellbar ist, um den Querschnitt des Verdichtungsraums 18 an die Anzahl bzw. den Querschnitt der miteinander zu verschweißenden Leiter einstellen zu können. Der Konverter 12 wird über eine Leitung 11 mit einem Generator 13 verbunden, der seinerseits über eine Leitung 15 mit einem Rechner 17 verbunden ist, um Schweißparameter bzw. die Querschnittsgeometrie der miteinander zu verschweißenden Leiter einzugeben. Die Leistungsabgabe des Generators 13 kann sodann bestimmt werden, um mittels eines in dem Rechner 17 abgespeicherten Programms die erforderlichen Schweißparameter abzurufen und entsprechend mittels des Konverters 12 Ultraschallschwingungen zu erzeugen, die über den Booster 14 auf die Sonotrode 16 bzw. deren Arbeitsfläche 19 **(****Fig.1****)** übertragen werden.

Die **Fig. 1** und **2** zeigen die wesentlichen Elemente des im Querschnitt verstellbaren, also in den Ausführungsbeispielen in Höhe und Breite verstellbaren Verdichtungsraums 18. Der Verdichtungsraum 18 ist in der ersten Achsenrichtung (z-Achse) an zwei einander gegenüberliegenden Seiten durch eine Arbeitsfläche 19 der Ultraschallschwingungen übertragenden Sonotrode 16 und eine Gegenfläche 20 einer in einer zweiten Achsenrichtung (y-Achse) verfahrbaren Gegenelektrode 21 begrenzt. In der zweiten Achsenrichtung, die in **Fig. 1** durch die y-Achse dargestellt ist, ist der Verdichtungsraum 18 an zwei einander gegenüberliegenden Seiten durch eine Begrenzungsfläche 22 eines in y-Achsenrichtung verfahrbaren Schieberelements 23 und eine Begrenzungsfläche 24 eines ebenso wie die Gegenelektrode 21 in die z-Achsenrichtung verfahrbaren Begrenzungselements 25 begrenzt.

Bei dem in **Fig. 1** dargestellten Ausführungsbeispiel des Verdichtungsraums 18 befinden sich zwei in Stapelanordnung übereinander liegend angeordnete Verbindungsbereiche 26, 27 von miteinander mittels einer Ultraschallschweißverbindung zu verbindenden Leitern 28, 29 auf der Arbeitsfläche 19 der Sonotrode 16, wobei **Fig. 1** die Verbindungsbereiche 26, 27 unmittelbar nach dem Einlegen in den geöffneten Verdichtungsraum 18 zeigt.

**Fig. 2** zeigt den Verdichtungsraum 18 in der geschlossenen Konfiguration, in der die den Verdichtungsraum 18 begrenzenden Komponenten, also die Sonotrode 16, die Gegenelektrode 21, das Schieberelement 23 und das Begrenzungselement 25, so gegeneinander verfahren sind, dass der nunmehr in seinem Volumen reduzierte Verdichtungsraum 18 eine Form 40 ausbildet, die bei einer Beaufschlagung der Verbindungsbereiche 26, 27 der Leiter 28, 29 mit mechanischen Schwingungen der Sonotrode 16 in einem Reibschweißvorgang eine Komprimierung und Verbindung der Verbindungsbereiche 26, 27 miteinander zur Ausbildung eines Schweißknotens ermöglicht.

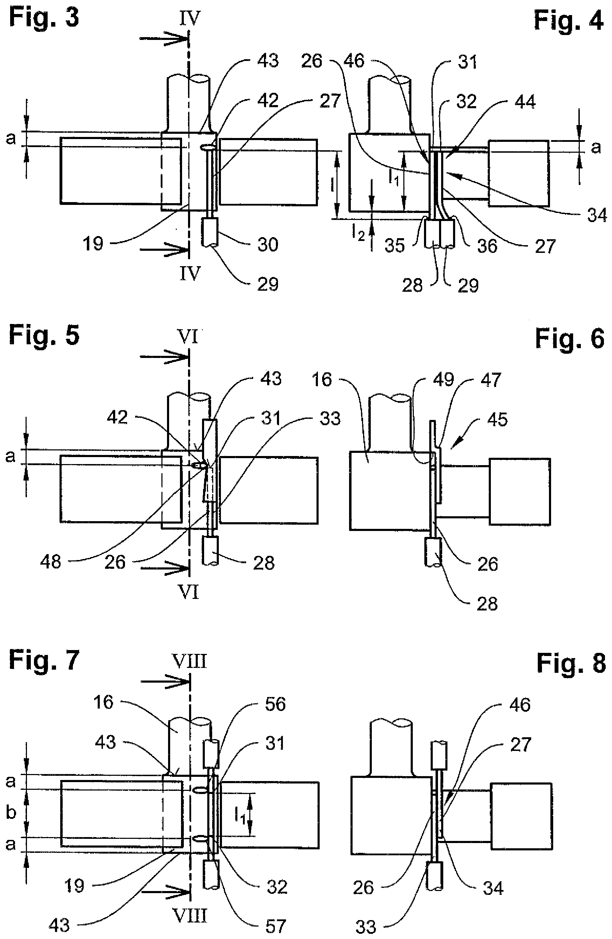

Die in **Fig. 1** dargestellte Stapelanordnung der Verbindungsbereiche 26, 27 der Leiter 28, 29 kann, wie in den **Fig. 3 und 4** dargestellt, durch eine gleichsinnige Ausrichtung der Leiter 28, 29 erfolgen, wobei die Leiter 28, 29 mit ihren von einer isolierenden Umhüllung 30 befreiten Blankbereichen 33, 34 in x-Achsenrichtung so weit in den Verdichtungsraum 18 eingeführt werden, dass sich durch den Abstand a, mit dem Endquerschnitte 31, 32 der Leiter 28, 29 von einem Seitenrand 43 der Arbeitsfläche 19 entfernt sind, eine vorgegebene Länge l₁ der Verbindungsbereiche 26, 27 ergibt. Dabei ist die Länge l der Blankbereiche 33, 34 so gewählt, dass ein ebenfalls in der Regel vorgegebener Abstand l₂ zwischen dem Verbindungsbereich 26, 27 und einer axialen Umhüllungsendfläche 35, 36 verbleibt.

Um eine entsprechende axiale Positionierung der Endquerschnitte 31, 32 der Leiter 28, 29 in dem geöffneten Verdichtungsraum 18 zu ermöglichen, ist der Verdichtungsraum 18 mit einer in **Fig. 1** schematisch dargestellten Markierungseinrichtung 37 versehen, die eine Strahlungsemissionseinrichtung 38 aufweist. Wie eine Zusammenschau der **Fig. 1** und **2** verdeutlicht, wird von der Strahlungsemissionseinrichtung 38, bei der es sich im Falle des vorliegenden Ausführungsbeispiels um eine Laserstrahlungsquelle handelt, längs eines Strahlengangs 39 Laserstrahlung emittiert, die bei der in **Fig. 1** dargestellten Ausführungsform der Markierungseinrichtung 37 über eine Strahlumlenkeinrichtung 41 in z-Achsenrichtung umgelenkt wird und in einen Reflektionspunkt, der eine Positionsmarke 42 ausbildet, auf die Arbeitsfläche 19 der Sonotrode 16 auftrifft.

Der Strahlengang 39 ist mittels der Strahlumlenkeinrichtung 41 oder mittels einer die Strahlumlenkeinrichtung 41 umfassenden Strahlungsleiteinrichtung, wie beispielsweise ein hier nicht näher dargestelltes Glasfaserkabel, zur Ausbildung eines definierten Strahlengangs 39 derart einstellbar, dass die Positionsmarke 42 an der Stelle auf der Arbeitsfläche 19 der Sonotrode 16 ausgebildet wird, die den gewünschten Abstand a zwischen dem Seitenrand 43 und den Endquerschnitten 31, 32 der Leiter 28, 29 definiert. In der Praxis bedeutet dies, dass eine Bedienungsperson, die die Blankbereiche 33, 34 der Leiter 28, 29 in den geöffneten Verdichtungsraum 18 einlegt, lediglich die Endquerschnitte 31, 32 der Blankbereiche 33, 34 so auf der Arbeitsfläche 19 der Sonotrode 16 axial positionieren muss, dass sich die Endquerschnitte 31, 32 an der Positionsmarke 42 befinden, um sicherzustellen, dass der zwischen den Leitern 28, 29 durch Verschweißung ausgebildete Schweißknoten die vorgegebene Knotengeometrie mit der Länge l₁ der Verbindungsbereiche 26, 27 und dem Abstand l₂ der Verbindungsbereiche 26, 27 von den Umhüllungsendflächen 35, 36 aufweist.

Wie den **Fig. 5** und **6** sowie **7** und **8** zu entnehmen ist, eignet sich die Markierungseinrichtung 37 grundsätzlich nicht nur zum Einsatz bei der Herstellung eines in den **Fig. 3** und **4** dargestellten Endschweißkotens 44, sondern auch zur Herstellung eines in seiner Geometrie definierten Terminalschweißknotens 45, wie in den **Fig. 5** und **6** dargestellt, sowie eines Durchgangsschweißknotens 46, der in den **Fig. 7** und **8** dargestellt ist.

Bei der Herstellung der in den **Fig. 5** und **6** dargestellten Terminalschweißknotens 45 erfolgt in gleicher Weise, wie vorstehend Bezug nehmend auf die **Fig. 3** und **4** ausgeführt, eine axiale Ausrichtung des Endquerschnitts 31 des Leiters 28 auf die Positionsmarke 42. Darüber hinaus wird auf dem Blankbereich 33 des Leiters 28 in Stapelanordnung ein Terminal 47 angeordnet, der mit einer, hier durch eine Einkerbung ausgebildeten, Markierung 48 versehen ist, die in Überdeckung mit der Positionsmarke 42 gebracht werden kann. Natürlich können geeignete Markierungen auch durch Prägelinien oder sonstige optisch erkennbare Merkmale gebildet sein. Somit ermöglicht auch in dem Fall der Herstellung eines Terminalschweißknotens 45 zwischen einem Terminal 47 und einem Leiter 28 die Markierungseinrichtung 37 die Herstellung eines in seiner Geometrie definierten Schweißknotens, der den Endquerschnitt 31 des Verbindungsbereichs 26 in einem definierten Abstand a von einer bündig mit dem Seitenrand 43 der Arbeitsfläche 19 der Sonotrode 16 angeordneten Gegenfläche 49 des Terminals aufweist, so dass eine Stauchung des Endquerschnitts 31 gegen die Gegenfläche 49 während der Schwingungsbeaufschlagung des Verbindungsbereichs 26 durch die Sonotrode 16 ausgeschlossen ist.

Bei der in den **Fig. 7** und **8** dargestellten axialen Positionierung der Endquerschnitte 31, 32 der Leiter 28, 29 befinden sich die Leiter in gegensinniger Anordnung, sodass sich die Leiter 28, 29 nicht parallel zueinander erstrecken, wie in dem in **Fig. 2** dargestellten Ausführungsbeispiel, sondern sich die Leiter in entgegengesetzte Richtungen erstrecken, um zwischen den Leitern 28, 29 einen Durchgangsschweißknoten 46 auszubilden.

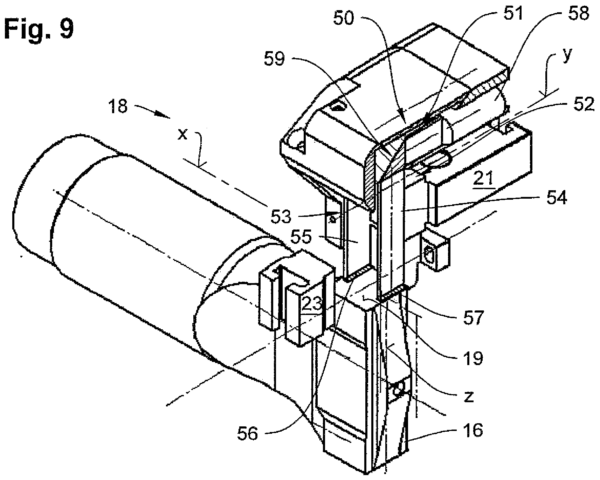

Den Einsatz einer Markierungseinrichtung 50 zur Ausbildung der Durchgangsknotenschweißknotens 46 zeigt **Fig.9** in einer isometrischen Darstellung. Die Markierungseinrichtung 50 weist eine Strahlungsleiteinrichtung 51 mit zwei Strahlleitern 52, 53 auf, die jeweils einen Strahlengang 54, 55 definieren, wobei jeder Strahlengang 54, 55 die Ausbildung einer Positionsmarke 56, 57 auf der Arbeitsfläche 19 der Sonotrode 16 ermöglicht.

Wie in **Fig. 9** dargestellt, weist die Markierungseinrichtung 50 zwei Strahlungsemissionseinrichtungen 58 auf, die jeweils den Strahlengang 54, 55 generieren. Die Strahlengänge 54, 55 werden jeweils mit einer Strahlumlenkeinrichtung 59 auf die z-Achse umgelenkt. Die Strahlungsemissionseinrichtungen 58 befinden sich oberhalb der Gegenelektrode 21 des Verdichtungsraumes 18 und gegenüberliegend dem Schieberelement 23, derart, dass die mit den Strahlungsemissionseinrichtungen 58 in horizontaler Richtung (y-Achse) generierten Strahlengänge 54, 55 mittels der Strahlumlenkeinrichtung 59 in die vertikale Richtung (z-Achse) umgelenkt werden, um jeweils in einem Reflektionspunkt auf die Arbeitsfläche 19 der Sonotrode 16 zur Ausbildung der Positionsmarken 56 und 57 aufzutreffen.

Wie aufgrund einer Zusammenschau der **Fig. 7, 8** und **9** deutlich wird, ermöglicht eine geeignete Einstellung des Abstands der Strahlengänge 54 und 55 voneinander mittels einer hier nicht näher dargestellten Verstelleinrichtung, mit der etwa die Strahlungsemissionseinrichtungen 58 und die Strahlumlenkeinrichtungen 59 in Richtung der x-Achse parallel zueinander verfahren werden, sowohl die Einstellung eines definierten Abstandes b zwischen den Positionsmarken 56, 57 auf der Arbeitsfläche 19 der Sonotrode 16, als auch einen definierten Abstand a der Positionsmarken 56, 57 von den Seitenrändern 43 der Arbeitsfläche 19, so dass sich nach einer axialen Ausrichtung der Endquerschnitte 31, 32 der Leiter 28, 29 auf die Positionsmarken 56, 57 eine genau definierte Länge für die Verbindungsbereiche 26, 27 der in Stapelanordnung aufeinander angeordneten Blankbereiche 33, 34 ergibt.

## Patentansprüche

1. Vorrichtung zum Verschweißen von stabförmigen, mit einer äußeren isolierenden Umhüllung (30) versehenen elektrischen Leitern (28, 29), die von der Umhüllung befreite Blankbereiche (33, 34) aufweisen, deren Länge (l) durch eine axiale Umhüllungsendfläche (35, 36) definiert ist, umfassend einen Verdichtungsraum (18) zur Aufnahme von zwei miteinander zu verbindenden Verbindungsbereichen (26, 27) der Leiter (28, 29), wobei der Verdichtungsraum (18) in einer ersten Achsenrichtung (z) an zwei einander gegenüberliegenden Seiten durch eine Arbeitsfläche (19) einer in die erste Achsenrichtung Ultraschallschwingungen übertragende Sonotrode (16) und eine Gegenfläche (20) einer Gegenelektrode (21) sowie in einer zweiten Achsenrichtung (y) an zwei einander gegenüberliegenden Seiten durch eine Begrenzungsfläche (22) eines in die zweite Achsenrichtung verfahrbaren Schieberelements (23) und eine Begrenzungsfläche (24) eines Begrenzungselements (25) begrenzt ist,
**dadurch gekennzeichnet,**
**dass** der Verdichtungsraum (18) mit einer Markierungseinrichtung (37, 38) zur axialen Positionierung der Verbindungsbereiche (26, 27) versehen ist, wobei die Markierungseinrichtung (37, 38) eine Strahlungsemissionseinrichtung (38, 58) aufweist, die berührungslos mit Endquerschnitten (31, 32) der Verbindungsbereiche (26, 27) zusammenwirkt, derart, dass eine Positionsmarke (42, 56, 57) durch einen Reflexionspunkt oder Absorptionspunkt der Strahlung auf der Arbeitsfläche der Sonotrode (16) oder der Begrenzungsfläche (24) des Begrenzungselementes (25) ausgebildet ist, welche Positionsmarke (42, 56, 57) die axiale Position der Endquerschnitte (31, 32) inner-halb des Verdichtungsraums (18) in einer dritten Achsenrichtung (x) parallel zur Arbeitsfläche (19) der Sonotrode (16) definiert.

2. Vorrichtung nach Anspruch 1,
**dadurch gekennzeichnet,**
**dass** zwischen der Strahlungsemissionseinrichtung (38, 58) und der Arbeitsfläche (19) der Sonotrode (16) oder der Begrenzungsfläche (24) des Begrenzungselementes (25) eine Strahlungsleiteinrichtung (51) mit zumindest einem Strahlleiter (52, 53) angeordnet ist, derart, dass ein durch den Strahlleiter definierter und auf die Arbeitsfläche der Sonotrode oder die Begrenzungsfläche des Begrenzungselementes auftreffender Strahlengang (39, 54, 55) zur Ausbildung der in einem definierten Abstand (a) von einem Seitenrand (43) der Arbeitsfläche der Sonotrode angeordneten Positionsmarke (42, 56, 57) dient.

3. Vorrichtung nach Anspruch 2,
**dadurch gekennzeichnet,**
**dass** der Strahlleiter (52, 53) derart ausgebildet ist, dass die Positionsmarke (42, 56, 57) eine linienförmige Erstreckung quer zur dritten Achsenrichtung aufweisen.

4. Vorrichtung nach Anspruch 2 oder 3 ,
**dadurch gekennzeichnet,**
**dass** der Strahlleiter (52, 53) mit einer Strahlumlenkeinrichtung (41, 59) versehen ist.

5. Vorrichtung nach einem der Ansprüche 2 bis 4,
**dadurch gekennzeichnet,**
**dass** der Strahlleiter als optischer Wellenleiter, insbesondere als Glasfaserkabel, ausgebildet ist.

6. Vorrichtung nach Anspruch 5,
**dadurch gekennzeichnet,**
**dass** die Strahlumlenkeinrichtung integral im Strahlleiter ausgebildet ist.

7. Vorrichtung nach einem der vorangehenden Ansprüche,
**dadurch gekennzeichnet,**
**dass** die Strahlungsemissionseinrichtung (38, 58) oberhalb des Begrenzungselements (25) und gegenüberliegend des Schieberelements (23) mit Abstand zur Arbeitsfläche (19) der Sonotrode (16) angeordnet ist, derart, dass ein aus der Strahlungsemissionseinrichtung (38, 58) austretender Strahlengang (39, 54, 55) zu der über der Arbeitsfläche der Sonotrode angeordneten Strahlumlenkeinrichtung (41, 59) verläuft und der aus der Strahlumlenkeinrichtung austretende Strahlengang zur Ausbildung der Positionsmarke (42, 56, 57) auf die Arbeitsfläche der Sonotrode auftrifft.

8. Vorrichtung nach einem der Ansprüche 2 bis 7,
**dadurch gekennzeichnet,**
**dass** die Strahlungsleiteinrichtung (51) zwei Strahlleiter (52, 53) aufweist, die zwei Strahlengänge (54, 55) ausbilden, die zur Ausbildung von zwei in einem definierten Abstand (a) von den Seitenrändern (43) der Arbeitsfläche (19) der Sonotrode (16) und einem definierten Abstand (b) voneinander angeordneten Positionsmarken (56, 57) dienen.

9. Vorrichtung nach einem der vorangehenden Ansprüche,
**dadurch gekennzeichnet,**
**dass** die Strahlungsemissionseinrichtung (38, 58) als optische Strahlung emittierende Strahlungsquelle ausgebildet ist.

10. Vorrichtung nach Anspruch 9,
**dadurch gekennzeichnet,**
**dass** die Strahlungsquelle als Laserstrahlungsquelle ausgebildet ist.

## Claims

1. A device for welding rod-shaped electrical conductors (28, 29) provided with an outer insulating sheath (30) and having blank regions (33, 34) free of the sheath, whose length (1) is defined by an axial sheath end surface (35, 36), the device comprising a compression space (18) for receiving two connecting regions (26, 27) of the conductors (28, 29) to be connected to each other, the compression space being limited in a first axial direction (z) at two opposing sides by a working surface (19) of a sonotrode (16) transmitting ultrasonic vibrations in the first axial direction and by an opposing surface (20) of an opposing electrode (21) as well as in a second axial direction (y) at two opposing sides by a limiting surface (22) of a slider element (23) displaceable in the second axial direction and by a limiting surface (24) of a limiting element (25),
**characterized in that**
the compression space (18) is provided with a marking device (37, 38) for the axial positioning of the connecting regions (26, 27), the marking device comprising a radiation-emitting device (38, 58) interacting in a contactless manner with end cross-sections (31, 32) of the connecting regions (26, 27) in such a manner that a position mark (42, 56, 57) is realized on the working surface of the sonotrode (16) or on the limiting surface (24) of the limiting element (25) by a point of reflection or point of absorption of the radiation, the position mark (42, 56, 57) defining the axial position of the end cross-sections (31, 32) within the compression space (18) in a third axial direction (x) parallel to the working surface (19) of the sonotrode (16).

2. The device according to claim 1,
**characterized in that**
a radiation-guiding device (51) comprising at least one beam guide (52, 53) is arranged between the radiation-emitting device (38, 58) and the working surface (19) of the sonotrode (16) or the limiting surface (24) of the limiting element (25) in such a manner that a beam path (39, 54, 55) defined by the beam guide and impinging on the working surface of the sonotrode or on the limiting surface of the limiting element serves for forming the position mark (42, 56, 57) arranged at a defined distance (a) from a side edge (43) of the working surface of the sonotrode.

3. The device according to claim 2,
**characterized in that**
the beam guide (52, 53) is realized in such a manner that the position mark (42, 56, 57) extends linearly at a right angle to the third axial direction.

4. The device according to claim 2 or 3,
**characterized in that**
the beam guide (52, 53) is provided with a beam deflection device (41, 59).

5. The device according to any one of claims 2 to 4,
**characterized in that**
the beam guide is realized as an optical waveguide, in particular as a fiber optic cable.

6. The device according to claim 5,
**characterized in that**
the beam deflection device is realized integrally in the beam guide.

7. The device according to any one of the preceding claims,
**characterized in that**
the radiation-emitting device (38, 58) is arranged above the limiting element (25) and opposite the slider element (23) at a distance to the working surface (19) of the sonotrode (16) in such a manner that a beam path (39, 54, 55) exiting the radiation-emitting device (38, 59) extends toward the beam deflection device (41, 59) arranged above the working surface of the sonotrode and the beam path exiting the beam deflection device impinges on the working surface of the sonotrode so as to form the position mark (42, 56, 57).

8. The device according to any one of claims 2 to 7,
**characterized in that**
the beam deflection device (51) comprises two beam guides (52, 53) forming two beam paths (54, 55) serving for forming two position marks (56, 57) arranged at a defined distance (a) to the side edges (43) of the working surface (19) of the sonotrode (16) and at a defined distance (b) to each other.

9. The device according to any one of the preceding claims,
**characterized in that**
the radiation-emitting device (38, 58) is realized as a radiation source emitting optical radiation.

10. The device according to claim 9,
**characterized in that**
the radiation source is realized as a laser radiation source.

## Revendications

1. Dispositif pour souder des conducteurs (28, 29) électriques en forme de tige pourvus d'un enveloppe (30) extérieur isolant et ayant des zones nues (33, 34) libérée de l'enveloppe, dont longueur (1) étant définie par une surface d'extrémité d'enveloppe (35, 36) axiale, le dispositif comprenant une salle de compression (18) pour recevoir deux zones de connexion (26, 27) des conducteurs (28, 29) à être reliées les unes aux autres, la salle de compression (18) étant limitée dans une première direction (z) axiale à deux côtés opposés par un plan de travail (19) d'un sonotrode (16) transmettant des vibrations ultrasoniques dans la première direction axiale et par une surface (20) opposée d'un électrode (21) opposé ainsi que dans une deuxième direction (y) axiale à deux côtés opposés par une surface de limitation (22) d'un élément (23) coulissant déplaçable dans la deuxième direction axiale et par une surface de limitation (24) d'un élément de limitation (25),
**caractérisé en ce que**
la salle de compression (18) est pourvue d'un dispositif de marquage (37, 38) pour le positionnement axial des zones de connexion (26, 27), le dispositif de marquage (37, 38) comprenant un dispositif d'émission de rayonnement (38, 58) interagissant avec des sections transversales d'extrémité (31, 32) des zones de connexion (26, 27) sans contact de telle manière qu'un marque de position (42, 56, 57) est réalisé sur le plan de travail du sonotrode (16) ou sur la surface de limitation (24) de l'élément de limitation (25) par un point de réflexion ou un point d'absorption du rayonnement, le marque de position (42, 56, 57) définissant la position axiale des sections transversales d'extrémité (31, 32) dans la salle de compression (18) dans une troisième direction (x) axiale parallèle au plan de travail (19) du sonotrode (16).

2. Dispositif selon la revendication 1,
**caractérisé en ce qu'**
un dispositif à guider de rayonnement (51) comprenant au moins un guide de faisceau (52, 53) est disposé entre le dispositif d'émission de rayonnement (38, 58) et le plan de travail (19) du sonotrode (16) ou la surface de limitation (24) de l'élément de limitation (25) de telle manière qu'un trajet de faisceau (39, 54, 55) défini par le guide de faisceau et tombant sur le plan de travail du sonotrode ou sur la surface de limitation de l'élément de limitation sert à former le marque de position (42, 56, 57) disposé à une distance (a) définie d'un bord (43) latéral du plan de travail du sonotrode.

3. Dispositif selon la revendication 2,
**caractérisé en ce que**
le guide de faisceau (52, 53) est réalisé de telle manière que le marque de position (42, 56, 57) s'étend linéairement à un angle perpendiculaire à la troisième direction axiale.

4. Dispositif selon la revendication 2 ou 3,
**caractérisé en ce que**
le guide de faisceau (52, 53) est pourvu d'un dispositif de déviation de faisceau (41, 59).

5. Dispositif selon l'une quelconque des revendications 2 à 4,
**caractérisé en ce que**
le guide de faisceau est réalisé en tant que guide à ondes, en particulier en tant que câble à fibre optique.

6. Dispositif selon la revendication 5,
**caractérisé en ce que**
le dispositif de déviation de faisceau est réalisé intégralement dans le guide de faisceau.

7. Dispositif selon l'une quelconque des revendications précédentes,
**caractérisé en ce que**
le dispositif d'émission de rayonnement (38, 58) est disposé au-dessus de l'élément de limitation (25) et opposé à l'élément coulissant (23) à une distance au plan de travail (19) du sonotrode (16) de telle manière qu'un trajet de faisceau (39, 54, 55) sortant le dispositif d'émission de rayonnement (38, 59) s'étend vers le dispositif de déviation de faisceau (41, 59) disposé au-dessus du plan de travail du sonotrode et le trajet de faisceau sortant le dispositif de déviation de faisceau tombe sur le plan de travail du sonotrode afin de former le marque de position (42, 56, 57).

8. Dispositif selon l'une quelconque des revendications 2 à 7,
**caractérisé en ce que**
le dispositif de déviation de faisceau (51) comprend deux guides de faisceau (52, 53) formant deux trajets de faisceau (54, 55) servant à former deux marquages de position (56, 57) disposés à une distance (a) définie aux bords (43) latéraux du plan de travail (19) du sonotrode (16) et à une distance (b) définie les uns aux autres.

9. Dispositif selon l'une quelconque des revendications précédentes,
**caractérisé en ce que**
le dispositif d'émission de rayonnement (38, 58) est réalisé en tant que source de rayonnement émettant du rayonnement optique.

10. Dispositif selon la revendication 9,
**caractérisé en ce que**
la source de rayonnement est réalisé en tant que source de faisceau laser.
